# EUROPEAN PATENT SPECIFICATION

(11) **EP 1 520 480 B1**
(45) Date of publication and mention of the grant of the patent: **05.09.2007**
(21) Application number: 04020119.6
(22) Date of filing: 25.08.2004
(51) Int. Cl.: A22C 7/00

(54) **Machine for shaping food products such as hamburgers or the like**
Nahrungsmittelformgebungssvorrichtung zum Formgeben von beispielsweise Hamburger
Machine pour la confection de hamburger

(30) Priority: 02.10.2003 IT MI20031891
(43) Date of publication of application: 06.04.2005
(73) Proprietor: C.R.M. Costruzioni Revisioni Meccaniche S.R.L., 20052 Monza (Prov. of Milano) (IT)
(72) Inventor: Frigerio, Paolo, 20040 Cornate D'Adda (Prov. of Milano) (IT); Colombo, Ambrogio, 23017 Morbegno (Prov. of Sondrio) (IT)
(74) Representative: Modiano, Micaela Nadia

(56) References cited:
- EP-A- 1 097 642
- NL-C- 1 020 942
- US-A- 5 411 390
- US-A1- 2003 126 831
- PATENT ABSTRACTS OF JAPAN vol. 2002, no. 02, 2 April 2002 (2002-04-02) & JP 2001 299317 A (KIBUN FOODS INC), 30 October 2001 (2001-10-30)

## Description

The present invention relates to a machine for shaping food products such as hamburgers or the like.

Machines for shaping food products such as hamburgers and the like are known. Such machines generally comprise a supporting structure, which supports a roller that has a horizontal axis and is surmounted by a loading container that is designed to contain the food mix or minced meat to be shaped. The roller is arranged so as to close the bottom of the loading container and can rotate about its own axis. Such roller has, in a region of its cylindrical surface, a shaping recess, which can be filled with the product introduced in the loading container. By rotation of the roller about its own axis, the shaping recess is cyclically moved into the loading container, so as to receive the product to be shaped, and out of the loading container, in order to unload the shaped product. The shaping recess is closed, on its side directed toward the inside of the roller, by a plate, which can move so as to expel the shaped product when the shaping recess, as a consequence of the rotation of the roller about its own axis, is moved out of the loading container. The movement of the plate is achieved by means of a cam, which is arranged inside the roller and is fixed to the supporting structure of the machine.

The shaping recess generally has a circular plan, so as to obtain the traditional shape of hamburgers.

In the field of the shaping of food products such as hamburgers and the like, the need is felt to be able to vary the shape of the shaped product. Since in conventional machines the shaping recess is provided directly in the cylindrical surface of the roller, when one wishes to vary the shape of the product, such as a hamburger or the like, with these machines it is necessary to replace the roller with another roller provided with a differently shaped shaping recess.

For this reason, it is necessary to have available a plurality of rollers having different shapes of the shaping recess, but this significantly increases the investments required.

JP 2001-299317 discloses a drum molding apparatus for readily cleaning a rotating drum, in which a detachable female shaping section is connected to a limited portion of the drum's surface by means of screws.

US2003/0126831 discloses a shaping wheel for manufacturing formed bodies of a mouldable substance in which a plurality of moulds are disposed in respective bushes inserted radially from the outside into the shaping wheel in an exchangeable manner.

The aim of the present invention is to solve the problem cited above, by providing a machine for shaping food products such as hamburgers or the like that allows to vary, very simply and rapidly, the shape of the product such as a hamburger or the like.

Within this aim, an object of the invention is to provide a machine that allows to change the shape of the shaped product without requiring the complete replacement of the roller.

A further object of the invention is to provide a machine that reduces the investments required to have available a large number of possible shapes for the product to be shaped.

This aim and these and other objects that will become better apparent hereinafter are achieved by a machine for shaping food products such as hamburgers or the like according to claim 1.

Further characteristics and advantages of the invention will become better apparent from the description of a preferred but not exclusive embodiment of the machine according to the invention, illustrated by way of nonlimiting example in the accompanying drawings, wherein:
Figure 1 is an exploded perspective view of the roller of the machine according to the invention;
Figure 2 is a schematic view of the machine according to the invention, with the roller seen from the front and in partial cross-section, in an operating condition;
Figure 3 is a schematic view of the machine, similar to Figure 2, with the roller in another operating condition;
Figure 4 is a front view of the roller of the machine according to the invention, with some elements shown in exploded view;
Figure 5 is a partially sectional view, taken along an axial plane, of the roller of the machine according to the invention.

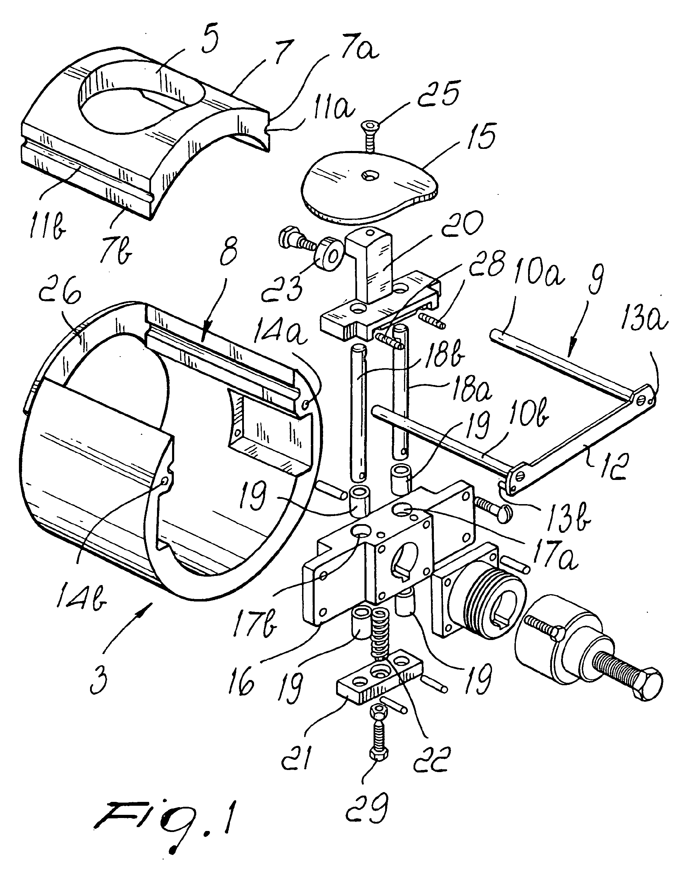

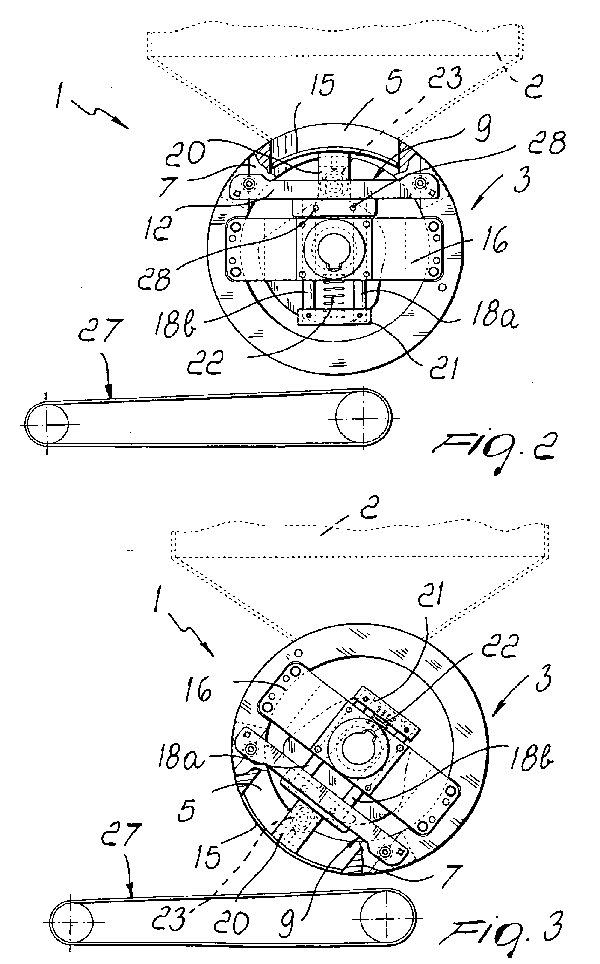

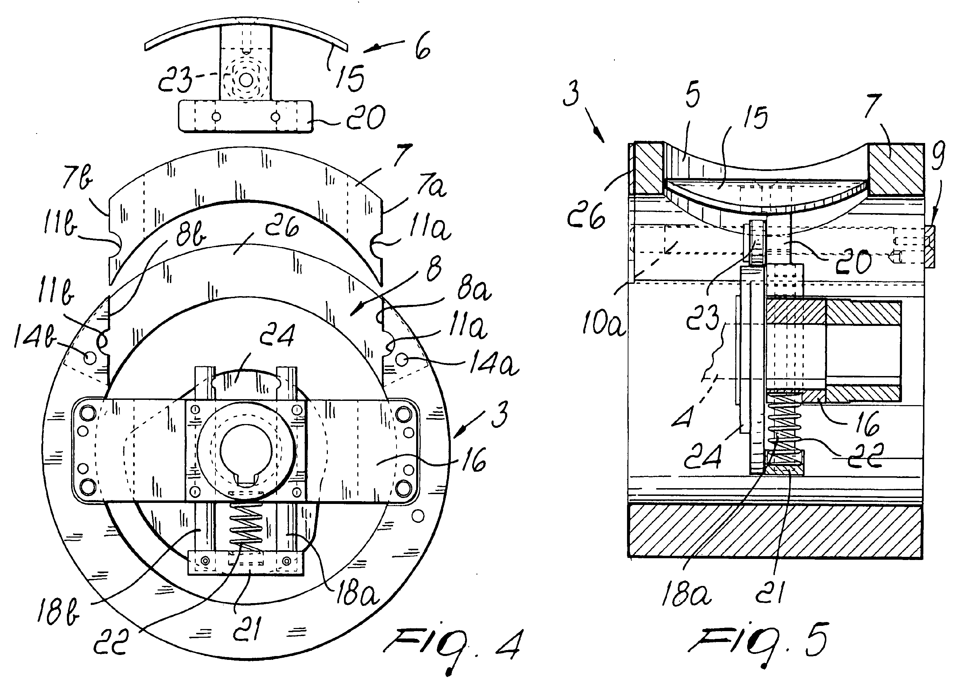

With reference to the figures, the machine according to the invention, generally designated by the reference numeral 1, comprises a supporting structure, not shown for the sake of simplicity, which supports a loading container 2, preferably made of stainless steel, and a roller 3, which has a horizontal axis 3a and is arranged so as to close the bottom of the loading container 2. The roller 3 is keyed coaxially on a shaft 4, which can be actuated so as to rotate about its own axis in a per se known manner.

The roller 3 has, in a region of its cylindrical surface, a shaping recess 5, which can be filled with the product introduced in the loading container 2. The roller 3, as a consequence of the rotary actuation of the shaft 4, is turned about its own axis 3a in order to cyclically move the shaping recess 5 into the loading container 2, so as to receive the product to be shaped, and out of the loading container 2, so as to unload the shaped product.

The roller 3 is provided with means 6 for expelling the shaped product from the shaping recess 5.

According to the invention, the roller 3 has a portion 7 of its cylindrical surface, in which the shaping recess 5 is formed, that is detachably coupled to the remaining part of the roller 3 and is interchangeable with at least one other portion of the cylindrical surface, in which there is a shaping recess that differs in terms of shape and/or dimensions, in order to allow the shaping of hamburgers or the like having different shapes and/or dimensions.

More particularly, the roller 3 is shaped substantially like a hollow cylinder and has a recess on its cylindrical surface, which forms a main receptacle 8 that can be occupied by the portion 7 that supports the shaping recess 5.

Preferably, means for detachably locking the portion 7 in the main receptacle 8 are provided.

More particularly, the portion 7, which supports the shaping recess 5, is shaped like a portion of a hollow cylinder that extends from one end of the roller 3 to the other and is laterally delimited by two flat faces 7a and 7b, which are parallel to each other and perpendicular to the end surfaces of the roller.

The detachable locking means comprise a handle element 9, provided with two locking pins 10a, 10b, which are parallel to each other and can be detachably inserted in corresponding locking receptacles 11a, 11b, formed on the faces 7a, 7b that laterally delimit the portion 7 and on the faces 8a, 8b of the main receptacle 8 that faces them: the locking receptacles 11a, 11b are arranged parallel to the axis 3a of the roller 3.

The locking pins 10a, 10b are connected to each other, at one of their axial ends, by a cross-member 12, which is also provided with locking pins 13a, 13b that can engage in corresponding receptacles 14a, 14b formed in the body of the roller 3.

The expulsion means 6 comprise a plate 15, which has, in plan view, a shape that corresponds to the plan shape of the shaping recess 5 and forms the bottom of said shaping recess 5. The plate 15 can move radially with respect to the roller 3 from a filling position, in which it is arranged in recessed position with respect to the outside of the cylindrical surface of the roller 3, to an expulsion position, in which it is at least flush with the outside of the cylindrical surface of the roller 3, in order to expel the shaped product from the shaping recess 5.

The expulsion means comprise means for guiding the plate 15, which are accommodated in the roller 3, and the plate 15 is connected to a supporting element 20, detachably associated with said guiding means, which are supported so that they can slide by the roller 3 along a radial direction, so as to guide the transfer of the plate 15 from the filling position to the expulsion position and vice versa.

The supporting element 20 is detachably associated with the guiding means, in order to allow replacement of the plate 15 with another plate that has a different shape and/or dimensions so as to match the shape of the shaping recess 5 of the portion 7 that is fitted on the roller 3.

More particularly, a block 16 is fixed inside the body of the roller 3, and sliding receptacles 17a, 17b are formed therein; said receptacles are radially orientated with respect to the roller 3, and two secondary shafts 18a, 18b are slidingly coupled to said receptacles and constitute said guiding means, which pass through the block 16 and through sliding bushes 19 supported by the block 16. An axial end of the secondary shafts 18a, 18b, which protrudes from one side of the block 16, is detachably connected, for example by means of screws 28, to the supporting element 20 with which the plate 15 is associated, for example by means of a screw 25. The other axial end of the secondary shafts 18a, 18b that protrudes from the opposite side of the block 16 is connected to a cross-member 21, and a spring 22 is interposed between the cross-member 21 and the block 16 and is designed to keep the supporting element 20, and therefore the plate 15, retracted toward the inside of the roller 3. The degree of retraction of the plate 15 toward the inside of the roller 3 can be adjusted, in a per se known manner, by way of an adjustment screw 29, so as to vary the depth of the shaping recess 5 and therefore the quantity of the product shaped by means of the shaping recess 5.

The expulsion means further comprise a cam follower roller 23, which is connected to the supporting element 20 and which, in the rotation of the roller 3 about its own axis 3a, follows the profile of a cam 24, which is accommodated inside the roller 3 and is fixed to the supporting structure of the machine. The contact of the cam follower roller 23 on the cam 24 is maintained by the action of the spring 22.

For the sake of completeness in description, it should also be noted that the main receptacle 8 is closed at one of the ends of the roller 3 by a plate 26, which is fixed to the roller 3.

Below the roller 3 there can be a conveyor belt 27, as in conventional machines, for removing the shaped product.

Operation of the machine according to the invention is as follows.

The food product to be shaped is inserted in the loading container 2 and pushed toward the bottom in the direction of the cylindrical surface of the roller 3.

The roller 3, actuated so as to rotate about its own axis 3a, cyclically moves the shaping recess 5 into the loading container 2 and out of the loading container 2. The shape of the profile of the cam 24 is such that when the shaping recess 5 is inside the loading container 2, the plate 15 is shifted toward the inside of the roller 3 and is in a recessed position with respect to the outer profile of the cylindrical surface of the roller 3, forming the bottom of the shaping recess 5. For this reason, when the shaping recess 5 is inside the loading container 2, the product contained in the loading container 2 fills the shaping recess 5. The shape of the profile of the cam 24 is such as to produce, in a rotational position of the roller 3 about its own axis 3a in which the shaping recess 5 is outside the loading container 2, the translational motion of the plate 15 away from the axis 3a of the roller, until the plate 15 is at least at the level of the outer lateral surface of the roller 3, causing the expulsion of the shaped product from the shaping recess 5. The shaped product falls onto the conveyor belt 27 and is removed, in a per se known manner. The roller 3, by continuing its rotation about its own axis 3a, returns with the shaping recess 5 inside the loading container 2, where the shaping recess 5 is again filled with the product to be shaped.

If one wishes to change the shape of the shaped product, in the machine according to the invention it is sufficient to remove the handle element 9, so as to free the portion 7 from the remaining part of the roller 3, and replace said portion 7 with another portion 7 that supports a shaping recess that has a different shape and/or dimensions. The new portion 7 is rigidly coupled to the remaining part of the roller 3 again by using the handle element 9, which is inserted with the locking pins 10a, 10b in the locking receptacles 11a, 11b. The plate 15 is also replaced, together with the portion 7, by another plate that is shaped so as to match the shaping recess of the new portion 7. It should be noted that the operation for replacing the portion 7 is extremely fast and easy, since it requires only the extraction and reinsertion of the handle element 9.

In practice it has been found that the machine according to the invention fully achieves the intended aim, since it allows to vary, with operations that are simple and quick to perform, the shape of the product that is shaped by the machine, without requiring the availability of a large number of rollers in store.

The machine thus conceived is susceptible of numerous modifications and variations, within the scope of the appended claims; all the details may be replaced with other technically equivalent elements.

In practice, the materials used, so long as they are compatible with the specific use, as well as the dimensions, may be any according to requirements and to the state of the art.

The disclosures in Italian Patent Application No. MI2003A001891 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine for shaping food products such as hamburgers or the like, comprising a loading container (2) and a roller (3) that has a horizontal axis and is arranged so as to close the bottom of said loading container; said roller (3) having, in a region of its cylindrical surface, a shaping recess (5) that can be filled with the product introduced in said loading container; said roller being actuatable with a rotary motion about its own axis in order to cyclically move said shaping recess (5) into said loading container, in order to receive the product to be shaped, and out of said loading container, in order to unload the shaped product, said roller being provided with means (6) for expelling the shaped product from said shaping recess (5), said roller having a portion (7) of its cylindrical surface in which said shaping recess is formed and that is detachably coupled to the remaining part of said roller, said roller being shaped substantially like a hollow cylinder and having a recess on its cylindrical surface, which forms a main receptacle (8) that can be occupied by said portion (7) of the cylindrical surface that supports said shaping recess (5), detachable locking means (9) for detachable locking of said portion (7) of the cylindrical surface in said main receptacle (8) being provided,
**characterized in that** said portion (7) of the cylindrical surface that supports said shaping recess (5) is shaped like a portion of a hollow cylinder that runs from one end to the other of said roller and is laterally delimited by two flat faces (7a,7b) that are parallel to each other and are perpendicular to the end faces of said roller, said portion (7) of the cylindrical surface being interchangeable with at least one other portion of the cylindrical surface in which a shaping recess is formed in terms of shape and/or dimensions.

2. The machine according to claim 1, **characterized in that** said detachable locking means (9) are handle-shaped and lie like a chord between the two ends of said portion (7) of cylindrical surface, on one of the two end faces of said roller.

3. The machine according to one or more of the preceding claims, **characterized in that** said detachable locking means (9) comprise a handle element, which is provided with two parallel locking pins (10a,10b) that can be detachably inserted in corresponding locking receptacles (11a,11b) formed in the faces (7a,7b) that laterally delimit said portion (7) of the cylindrical surface and in the faces (8a,8b) of said main receptacle (8) that face them, said locking receptacles (11a,11b) being arranged parallel to the axis (3a) of said roller (3).

4. The machine according to one or more of the preceding claims, **characterized in that** said expulsion means (6) comprise a plate (15) that forms the bottom of said shaping recess (5) and can move radially with respect to said roller (3) from a filling position, in which it is arranged in a recessed position with respect to the outer cylindrical surface of the roller (3), to an expulsion position, in which it is at least flush with the outer cylindrical surface of the roller, in order to expel the shaped product from said shaping recess (5).

5. The machine according to claim 4, **characterized in that** said plate (15) is detachably associated with said roller and is interchangeable with at least one other plate, which differs in terms of shape and/or dimensions so as to match the shaping recess (5) of the portion of the cylindrical surface that is fitted on said roller.

6. The machine according to one or more of the preceding claims, **characterized in that** said expulsion means (6) comprise guiding means that are accommodated in said roller, said plate (15) being connected to a supporting element (20) that is detachably associated with said guiding means; said guiding means being supported so that they can slide by said roller along a radial direction for the transfer of said plate (15) from said filling position to said expulsion position, and vice versa.

7. The machine according to claim 6, **characterized in that** said supporting element is connected to a cam follower (23), which is supported by said roller and couples to the profile of a fixed cam (24) that is arranged around the axis (3a) of said roller (3), said cam follower (23) tracing the profile of said cam (24) during the rotation of said roller about its own axis with respect to said cam (24), said profile being contoured so as to move said plate (15) along said radial direction from said filling position to said expulsion position, with said shaping recess (5) arranged outside said loading container (2), in contrast with elastic means (22).

8. The machine according to claim 2, **characterized in that** said locking means (9) comprises second locking pins (13a,13b) arranged at opposite ends of said chord and engaging with respective receptacles (14a,14b) provided on said remaining part of the roller on said one of the two end faces.

## Patentansprüche

1. Eine Nahrungsmittelformgebungvorrichtung zum Formgeben beispielsweise von Hamburgern, umfassend einen Ladebehälter (2) und einen Roller (3), der eine horizontale Achse hat und so angeordnet ist, um den Boden des Ladebehälters zu schliessen; wobei der Roller (3) in einem Bereich seiner zylindrischen Oberfläche eine Formgebungsausbuchtung (5) hat, die mit dem in den Ladebehälter eingeführten Produkt gefüllt werden kann; wobei der Roller mit einer um seine eigene Achse rotierenden Bewegung betätigbar ist, um zyklisch die Formgebungsausbuchtung (5) in den Ladebehälter, um das zu formende Produkt aufzunehmen, und aus dem Ladebehälter, um das geformte Produkt auszuladen, zu bewegen, wobei der Roller mit Mitteln (6) zum Ausstoßen des geformten Produkts aus der Formgebungsausbuchtung (5) bereitgestellt ist, wobei die zylindrische Oberfläche des Rollers einen Teilbereich (7) besitzt, in dem die Formgebungsausbuchtung ausgebildet ist und der lösbar mit dem restlichen Teil des Rollers verbunden ist, wobei der Roller im Wesentlichen wie ein Hohlzylinder geformt ist und eine Aussparung auf seiner Oberfläche aufweist, die eine Hauptaufnahme (8) bildet, die von dem Teil (7) der zylindrischen Oberfläche, die die Formgebungsausbuchtung (5) stützt, besetzt werden kann, wobei lösbare Verriegelungsmittel (9) zum lösbaren Verriegeln des Teils (7) der zylindrischen Oberfläche in der Hauptaufnahme (8) bereitgestellt sind,
**dadurch gekennzeichnet, dass** der Teil (7) der zylindrischen Oberfläche, die die Formgebungsausbuchtung (5) stützt, wie ein Teil eines Hohlzylinders geformt ist, der von einem Ende zum anderen Ende des Rollers verläuft und seitlich von zwei ebenen Flächen (7a, 7b) begrenzt ist, die parallel zueinander sind und senkrecht zu den Endflächen des Rollers sind, wobei der Teil (7) der zylindrischen Oberfläche mit mindestens einem anderen Teil der zylindrischen Oberfläche austauschbar ist, in dem eine Formgebungsausbuchtung in Hinblick auf Form und/oder Ausmessungen ausgebildet ist.

2. Die Vorrichtung gemäß Anspruch 1, **dadurch gekennzeichnet, dass** die lösbaren Verriegelungsmittel (9) bügelartig geformt sind und an einer der zwei Endflächen des Rollers, wie ein Gurt zwischen den beiden Enden des Teils (7) der zylindrischen Oberfläche liegen.

3. Die Vorrichtung gemäß einem oder mehreren der vorhergehenden Ansprüche, **dadurch gekennzeichnet, dass** die lösbaren Verriegelungsmittel (9) ein Bügelelement umfassen, welches mit zwei parallelen Verriegelungsstiften (10a, 10b) bereitgestellt ist, die lösbar in korrespondierende Verriegelungsaussparungen (11a, 11b), die in den Flächen (7a, 7b), die seitlich den Teil (7) der zylindrischen Oberfläche begrenzen, ausgebildet sind, und in die Flächen (8a, 8b) der Hauptaufnahme (8) denen sie gegenüberstehen, eingeführt werden können, wobei die Verriegelungsaussparungen (11a, 11b) parallel zu der Achse (3a) des Rollers (3) angeordnet sind.

4. Die Vorrichtung gemäß einem oder mehreren der vorhergehenden Ansprüche, **dadurch gekennzeichnet, dass** die Ausstoßmittel (6) eine Platte (15) umfassen, die den Boden der Formgebungsausbuchtung (5) bildet und in Bezug auf den Roller (3) radial von einer Füllposition, in der sie in Bezug auf die äußere zylindrische Oberfläche des Rollers (3) in einer versenkten Position angeordnet ist, zu einer Ausstoßposition, in der sie mindestens mit der äußeren zylindrischen Oberfläche bündig ist, um das geformte Produkt aus der Formgebungsausbuchtung (5) auszustoßen.

5. Die Vorrichtung gemäß Anspruch 4, **dadurch gekennzeichnet, dass** die Platte (15) lösbar mit dem Roller in Verbindung steht und mit mindestens einer Platte austauschbar ist, die sich hinsichtlich Form und/oder Abmessungen unterscheidet, um zu der Formgebungsausbuchtung (5) des Teils der zylindrischen Oberfläche, die auf dem Roller angebracht ist, zu passen.

6. Die Vorrichtung gemäß einem oder mehreren der vorhergehenden Ansprüche, **dadurch gekennzeichnet, dass** die Ausstoßmittel (6) Führungsmittel umfassen, die in dem Roller untergebracht sind, wobei die Platte (15) mit einem Stützelement (20) verbunden ist, das mit den Führungsmitteln lösbar assoziiert ist; wobei die Führungsmittel so gestützt sind, dass sie durch den Roller entlang einer radialen Richtung für den Transport der Platte (15) von einer Füllposition zu einer Ausstoßposition, und umgekehrt, gleiten können.

7. Die Vorrichtung gemäß Anspruch 6, **dadurch gekennzeichnet, dass** das Stützelement mit einem Nockenstößel (23) verbunden ist, der vom Roller gestützt ist und an das Profil einer festen Nocke (24) ankuppelt, die um die Achse (3a) des Rollers (3) angeordnet ist, wobei der Nockenstößel (23) das Profil der Nocke (24) während der Rotation des Rollers um seine eigene Achse in Bezug auf die Nocke (24) verfolgt, wobei das Profil so nachgeformt ist, um die Platte (15) entlang der radialen Richtung von der Füllposition zu der Ausstoßposition zu bewegen, mit der außerhalb des Ladebehälters (2) angeordneten Formgebungsausbuchtung (5), demgegenüber mit elastischen Mitteln (22).

8. Die Vorrichtung gemäß Anspruch 2, **dadurch gekennzeichnet, dass** das Verriegelungsmittel (9) zweite Verriegelungsstifte (13a, 13b) umfasst, die an entgegengesetzten Enden des Gurts angeordnet sind und in entsprechende Aussparungen (14a, 14b) eingreifen, die an dem restlichen Teil des Rollers auf der einen der zwei Endflächen bereitgestellt sind.

## Revendications

1. Machine pour mettre en forme des produits alimentaires tels que des hamburgers ou semblables, comprenant un réservoir de chargement (2) et un rouleau (3) qui a un axe horizontal et qui est disposé de façon à clore le fond dudit réservoir de chargement ; ledit rouleau (3) ayant, dans une région de sa surface cylindrique, un évidement (5) de mise en forme qui peut être rempli par le produit introduit dans ledit réservoir de chargement ; ledit rouleau pouvant être entraîné dans un mouvement de rotation autour de son propre axe afin de faire pénétrer de façon cyclique ledit évidement (5) de mise en forme à l'intérieur dudit réservoir de chargement, de manière à recevoir le produit devant être mis en forme, et afin de l'extraire hors dudit réservoir de chargement, de manière à décharger le produit mis en forme, ledit rouleau étant muni de moyens (6) pour expulser le produit mis en forme hors dudit évidement (5) de mise en forme, ledit rouleau ayant une portion (7) de sa surface cylindrique dans laquelle est formé ledit évidement de mise en forme et qui est couplée de façon détachable à la portion restante dudit rouleau, ledit rouleau étant de forme sensiblement équivalente à un cylindre creux et ayant un évidement sur sa surface cylindrique, qui forme un réceptacle principal (8) qui peut être occupé par ladite portion (7) de la surface cylindrique qui supporte ledit évidement (5) de mise en forme, des moyens de verrouillage (9) déverrouillables étant prévus pour verrouiller de façon détachable ladite portion (7) de la surface cylindrique dans ledit réceptacle principal (8),
**caractérisée en ce que** ladite portion (7) de la surface cylindrique qui supporte ledit évidement (5) de mise en forme est conformée comme une portion d'un cylindre creux qui s'étend d'une extrémité à l'autre dudit rouleau et qui est délimitée latéralement par deux faces planes (7a, 7b) qui sont parallèles l'une à l'autre et qui sont perpendiculaires aux faces d'extrémité dudit rouleau, ladite portion (7) de la surface cylindrique étant interchangeable en termes de forme et/ou de dimensions avec au moins une autre portion de la surface cylindrique dans laquelle est formé un évidement de mise en forme.

2. Machine selon la revendication 1, **caractérisée en ce que** lesdits moyens de verrouillage (9) déverrouillables sont conformés en manche et sont à plat telle une corde entre les deux extrémités de ladite portion (7) de surface cylindrique, sur l'une des deux faces d'extrémité dudit rouleau.

3. Machine selon l'une au moins des revendications précédentes, **caractérisée en ce que** lesdits moyens de verrouillage (9) déverrouillables comprennent un élément de type manche, qui est muni de deux axes de verrouillage (10a, 10b) parallèles qui peuvent être insérés de façon amovible dans des réceptacles de verrouillage correspondants (11a, 11b) conformés dans les faces (7a, 7b) qui délimitent latéralement ladite portion (7) de la surface cylindrique et dans les faces (8a, 8b) dudit réceptacle principal (8) qui leur font face, lesdits réceptacles de verrouillage (11a, 11b) étant disposés parallèlement à l'axe (3a) dudit rouleau (3).

4. Machine selon l'une au moins des revendications précédentes, **caractérisée en ce que** lesdits moyens d'expulsion (6) comprennent une plaque (15) qui forme le fond de l'évidement (5) de mise en forme et qui peut être déplacée radialement par rapport audit rouleau (3) à partir d'une position de remplissage, dans laquelle elle est orientée dans une position de retrait à l'intérieur par rapport à la surface cylindrique externe du rouleau (3), jusqu'à une position d'expulsion, dans laquelle elle est au moins en affleurement de la surface cylindrique externe du rouleau, de façon à expulser le produit mis en forme hors dudit évidement (5) de mise en forme.

5. Machine selon la revendication 4, **caractérisée en ce que** ladite plaque (15) est associée de façon amovible audit rouleau et est interchangeable avec au moins une autre plaque, qui est différente en termes de forme et/ou dimensions de façon à correspondre à l'évidement (5) de mise en forme de la portion de la surface cylindrique qui est logée sur ledit rouleau.

6. Machine selon l'une au moins des revendications précédentes, **caractérisée en ce que** lesdits moyens d'expulsion (6) comprennent des moyens de guidage qui sont logés dans ledit rouleau, ladite plaque (15) étant reliée à un élément de support (20) qui est associé de façon amovible auxdits moyens de guidage ; lesdits moyens de guidage étant supportés de façon à ce qu'ils puissent coulisser à côté dudit rouleau le long d'une direction radiale pour le transfert de ladite plaque (15) à partir de la position de remplissage jusqu'à ladite position d'expulsion, et vice versa.

7. Machine selon la revendication 6, **caractérisée en ce que** ledit élément de support est relié à un suiveur de came (23), qui est supporté par ledit rouleau et qui s'adapte au profil d'une came fixe (24) qui est disposée autour de l'axe (3a) dudit rouleau (3), ledit suiveur de came (23) suivant le profil de ladite came (24) lors de la rotation dudit rouleau autour de son propre axe par rapport à ladite came (24), ledit profil étant profilé de façon à provoquer le déplacement de ladite plaque (15) le long de ladite direction radiale à partir de ladite position de remplissage jusqu'à ladite position d'expulsion, avec ledit évidement (5) de mise en forme disposé à l'extérieur dudit réservoir de chargement (2), contrairement aux moyens élastiques (22).

8. Machine selon la revendication 2, **caractérisée en ce que** lesdits moyens de verrouillage (9) comprennent des seconds axes de verrouillage (13a, 13b) disposés à des extrémités opposées de ladite corde et qui s'engagent dans des réceptacles correspondants (14a, 14b) prévus sur ladite portion restante du rouleau sur ladite une des deux faces d'extrémités.
